# FASCICULE DE BREVET EUROPEEN

(11) **EP 3 669 961 B1**
(45) Date de publication et mention de la délivrance du brevet: **04.08.2021**
(21) Numéro de dépôt: 19217525.5
(22) Date de dépôt: 18.12.2019
(51) Int. Cl.: B01D 29/23, B01D 29/27, B01D 29/50, B01D 29/54, B01D 29/58, B01D 36/02, E04H 4/12

(54) **ENSEMBLE DE FILTRATION POUR L'ENTRETIEN D'UNE PISCINE**
FILTEREINHEIT FÜR DIE WARTUNG EINES SCHWIMMBADS
FILTERING ASSEMBLY FOR MAINTENANCE OF A SWIMMING POOL

(30) Priorité: 21.12.2018 FR 1873942
(43) Date de publication de la demande: 24.06.2020
(73) Titulaire: Innovation Pool Factory, 10000 Troyes (FR)
(72) Inventeur: LOPEZ, Yannick, Manuel, Michel, 10190 MESNIL SAINT LOUP (FR); DRION, Lucas, Lionel, Florent, 10000 TROYES (FR)
(74) Mandataire: Marconnet, Sébastien

(56) Documents cités:
- EP-A1- 1 108 457
- EP-A1- 2 551 004
- WO-A1-98/23355
- AU-A- 6 691 181
- FR-A1- 2 948 293

## Description

La présente invention porte sur un ensemble de filtration pour l'entretien d'une piscine. L'invention pourra également s'appliquer à l'entretien d'un spa ou d'un bassin naturel.

Généralement, les éléments de filtration de piscines, média filtrant, poche ou autre, sont fermés dans leur partie inférieure afin que les débris restent dans la cartouche lors de son extraction de la cuve de filtration.

La conséquence est que l'extraction des éléments de filtration nécessite à l'utilisateur de fournir un effort important. En effet, lorsque l'élément de filtration est colmaté, c'est-à-dire lorsque les pores du filtre sont obstrués par des salissures, l'eau s'écoule difficilement à travers le média et la masse à soulever comprend le filtre et l'eau qui ne s'échappe pas.

Une variante connue de l'homme du métier consiste à ouvrir la partie inférieure de la cartouche, ce qui permet ne pas soulever la masse de l'eau. En contrepartie, les débris présents dans l'élément de filtration restent dans la cuve et peuvent se retrouver dans le bassin.

Le document FR3048365 décrit une seconde variante avec un élément de filtration fermé à son extrémité axiale inférieure doté d'un système de repliement qui permet de vider au moins partiellement l'eau chargée en impuretés présente dans l'élément de filtration. En contrepartie, les débris présents dans l'élément de filtration peuvent au moins partiellement en sortir avec l'eau qui en est vidée, ils peuvent se retrouver dans la cuve et dans le bassin.

Le document EP1108457 décrit un dispositif de filtration comprenant un ensemble filtrant constitué d'un premier élément en matériau jetable ayant des capacités de filtration et d'un second élément faisant office d'armature de positionnement et de rigidité audit premier élément en retenant certaines impuretés.

Le document FR2948293 décrit un dispositif comprenant une cartouche composée d'un média filtrant et d'un média drainant disposés circulairement en forme de plis, la partie supérieure de la cartouche étant ouverte pour le passage de l'eau, tandis que sa partie inférieure est fermée pour l'évacuation de l'eau au travers du média filtrant et du média drainant.

D'autres éléments de filtration sont connus de EP 2 551 004 A1, AU 66911 81 A et WO 98/23355 A1.

L'invention vise à remédier efficacement à cet inconvénient en proposant un ensemble de filtration pour une piscine, spa ou bassin naturel, caractérisé en ce qu'il comporte:
- un élément de filtration apte à assurer une filtration fine d'une eau de la piscine, du spa ou du bassin naturel, ledit élément de filtration présentant une extrémité axiale inférieure ouverte et une extrémité axiale supérieure ouverte, ou une extrémité axiale inférieure fermée et une extrémité axiale supérieure ouverte, ou une extrémité axiale inférieure ouverte et une extrémité axiale supérieure fermée, et
- une enveloppe filtrante extérieure située autour de l'élément de filtration, ladite enveloppe filtrante étant à fond fermé poreux ou non et présentant une maille de filtration suffisamment fine pour retenir au moins une partie et idéalement la totalité des impuretés libérées par l'élément de filtration lors de son extraction.

L'invention permet ainsi, grâce aux extrémités ouvertes de l'élément de filtration, de minimiser les efforts à fournir pour son extraction tout en retenant les impuretés libérées par l'élément de filtration lors de son extraction grâce à la présence de l'enveloppe filtrante extérieure.

Selon une réalisation, l'élément de filtration et l'enveloppe filtrante présentent chacun une maille de filtration comprise entre 1 et 500 micromètres.

Selon une réalisation, l'élément de filtration est une cartouche filtrante de forme cylindrique creuse.

Selon une réalisation, la cartouche filtrante est constituée d'une nappe d'un matériau non tissé plissé en accordéon.

Selon une réalisation, la nappe est maintenue entre deux flasques annulaires ouverts.

Selon une réalisation, l'enveloppe filtrante est rigide ou semi-rigide.

Selon une réalisation, l'enveloppe filtrante est réalisée à partir d'un média filtrant, notamment en tissu de type chaussette ou poche filtrante.

Selon une réalisation, l'enveloppe filtrante est réalisée à partir d'une grille métallique à maille fine ou d'un plastique de faible porosité.

Selon l'invention, l'enveloppe filtrante est disposée autour d'un panier de filtration assurant une rigidification de l'élément de filtration.

L'invention a également pour objet un système de filtration pour piscine caractérisé en ce qu'il comporte un ensemble de filtration tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 est une vue en perspective éclatée de différents éléments d'un système de filtration intégrant un ensemble selon la présente invention;

La figure 2 est une vue en perspective éclatée d'un ensemble de filtration selon l'invention comportant un élément de filtration et une enveloppe filtrante disposée autour de l'élément de filtration.

Les éléments identiques, similaires ou analogues conservent la même référence d'une figure à l'autre.

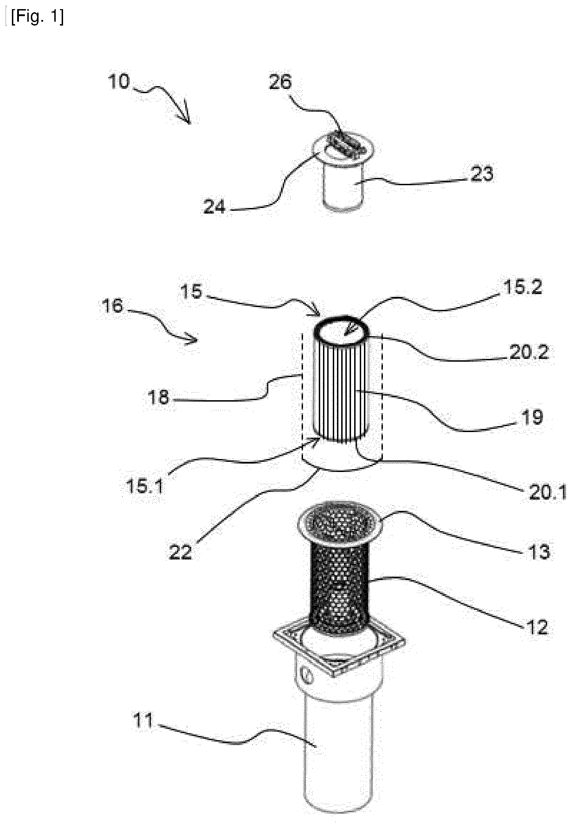

La figure 1 montre un système de filtration 10 d'eau de piscine, d'un spa ou d'un bassin naturel, comportant une cuve 11 accessible via une trappe d'accès. La cuve 11 pourra être intégrée à un skimmer constituant l'entrée du circuit d'eau et débouchant dans le bassin ou déportée par rapport au skimmer.

En l'occurrence, un panier de filtration 12 de forme globalement cylindrique est disposé à l'intérieur de la cuve 11. Ce panier de filtration 12 comporte un rebord 13 prolongé par une collerette d'appui sur une extrémité supérieure de la cuve 11. Le panier de filtration 12 présente des ouvertures ayant une taille adaptée pour limiter une déformation d'un élément de filtration 15. Le panier de filtration 12 pourra être réalisé dans un matériau plastique, matériau métallique, ou tout autre matériau.

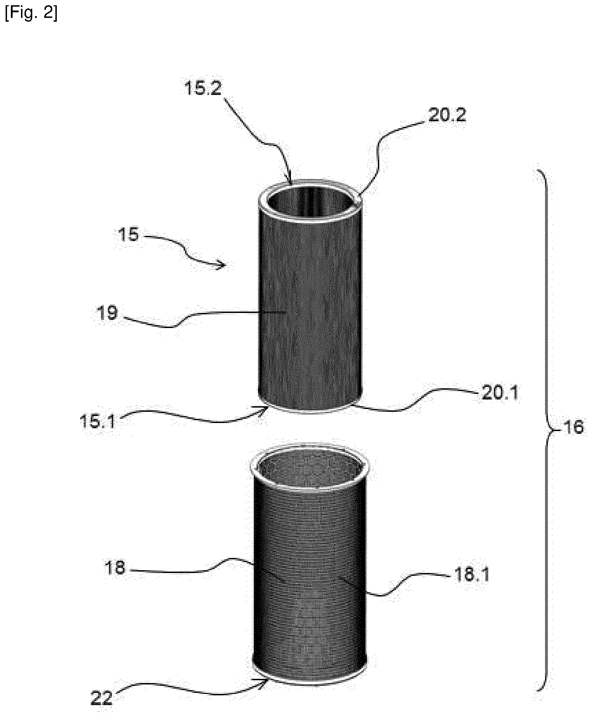

Un ensemble de filtration 16 comporte l'élément de filtration 15 destiné à être logé dans le panier de filtration 12 et une enveloppe filtrante 18 extérieure associée entourant l'élément de filtration 15, tel que montré sur la figure 2.

Plus précisément, l'élément de filtration 15 est apte à assurer une filtration fine de l'eau de la piscine. L'élément de filtration 15 présente une extrémité axiale inférieure 15.1 ouverte et une extrémité axiale supérieure 15.2 ouverte. En variante, l'élément de filtration 15 pourra présenter une extrémité axiale inférieure 15.1 fermée et une extrémité axiale supérieure 15.2 ouverte, ou une extrémité axiale inférieure 15.1 ouverte et une extrémité axiale supérieure 15.2 fermée.

Avantageusement, l'élément de filtration 15 est une cartouche filtrante de forme cylindrique creuse délimitant une ouverture axiale traversante pour le passage de l'eau. La cartouche filtrante 15 est par exemple constituée d'une nappe 19 d'un matériau non tissé plissé en accordéon. La nappe 19 est maintenue entre deux flasques annulaires 20.1, 20.2 ouverts. En variante, on utilise un média filtrant notamment dépourvu de pli, un préfiltre, une poche filtrante, ou tout autre élément de filtration.

L'enveloppe filtrante 18 extérieure située autour de l'élément de filtration 15 comporte un fond fermé 22 poreux ou non. Une paroi cylindrique 18.1 ouverte à son extrémité supérieure est issue du fond 22. L'enveloppe filtrante 18 présente une maille de filtration suffisamment fine pour retenir au moins une partie et idéalement la totalité des impuretés libérées par la cartouche filtrante lors de son extraction.

L'élément de filtration 15 et l'enveloppe filtrante 18 présentent chacun une maille de filtration comprise entre 1 et 500 micromètres. Les mailles de filtration de l'élément de filtration 15 et de l'enveloppe filtrante 18 pourront être différentes ou identiques.

Suivant un exemple de réalisation particulier, l'élément de filtration 15 présente une maille de filtration comprise entre 15 et 30 micromètres, tandis que l'enveloppe filtrante 18 présente une maille de filtration comprise entre 30 et 50 micromètres.

Dans tous les cas, le fait que la maille de filtration de l'enveloppe 18 soit au plus égale à 50 micromètres permet de garantir la retenue des débris lors de l'extraction de l'élément de filtration 15.

L'enveloppe filtrante 18 présente un diamètre interne supérieur au diamètre externe de l'élément de filtration 15. L'enveloppe filtrante 18 s'étend suivant au moins 80%, de préférence la totalité voire au-delà, de la hauteur de l'élément de filtration 15.

L'enveloppe filtrante 18 pourra être rigide ou semi-rigide.

L'enveloppe filtrante 18 pourra être réalisée à partir d'un média filtrant notamment en tissu de type chaussette ou poche filtrante. Dans ce cas, l'enveloppe filtrante 18 pourra comporter une armature ou être disposée autour du panier de filtration 12 assurant une rigidification de l'élément de filtration 15. Alternativement, l'enveloppe filtrante 18 est réalisée à partir d'une grille métallique à maille fine ou d'un plastique de faible porosité.

Un préfiltre 23 est destiné à s'insérer à l'intérieur de l'élément de filtration 15. Le préfiltre 23 comporte un rebord 24 prolongé par une collerette d'appui sur une extrémité supérieure de l'élément de filtration 15. Le préfiltre 23 pourra être muni d'une poignée 26.

Le préfiltre 23 de forme globalement cylindrique assure une filtration grossière laissant passer les particules de dimension inférieure à une fraction de millimètre sur un principe de filtre écran. Par exemple, le préfiltre 23 pourra comporter une toile à orifices de 0.1 à 3mm, par exemple 0.3mm, moulée entre des nervures de matière plastique injectée.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Ensemble de filtration (16) pour une piscine, spa ou bassin naturel, **caractérisé en ce qu'**il comporte:
- un panier de filtration (12),
- un élément de filtration (15) logé dans le panier de filtration (12) présentant des ouvertures ayant une taille adaptée pour limiter une déformation dudit élément de filtration (15),
- ledit élément de filtration (15) étant apte à assurer une filtration fine d'une eau de la piscine, spa ou bassin naturel, ledit élément de filtration (15) présentant une extrémité axiale inférieure (15.1) ouverte et une extrémité axiale supérieure (15.2) ouverte, et
- une enveloppe filtrante (18) extérieure située autour de l'élément de filtration (15), ladite enveloppe filtrante (18) étant à fond fermé (22) poreux ou non et présentant une maille de filtration suffisamment fine pour retenir au moins une partie et idéalement la totalité des impuretés libérées par l'élément de filtration (15) lors de son extraction.

2. Ensemble de filtration selon la revendication 1, **caractérisé en ce que** l'élément de filtration (15) et l'enveloppe filtrante (18) présentent chacun une maille de filtration comprise entre 1 et 500 micromètres.

3. Ensemble de filtration selon la revendication 1 ou 2, **caractérisé en ce que** l'élément de filtration (15) est une cartouche filtrante de forme cylindrique creuse.

4. Ensemble de filtration selon la revendication 3, **caractérisé en ce que** la cartouche filtrante (15) est constituée d'une nappe (19) d'un matériau non tissé plissé en accordéon.

5. Ensemble de filtration selon la revendication 4, **caractérisé en ce que** la nappe (19) est maintenue entre deux flasques annulaires (20.1, 20.2) ouverts.

6. Ensemble de filtration selon la revendication 1 ou 2, **caractérisé en ce que** l'élément de filtration (15) peut être un média filtrant, un préfiltre, une poche filtrante ou tout autre élément de filtration.

7. Ensemble de filtration selon l'une quelconque des revendications 1 à 6, **caractérisé en ce que** l'enveloppe filtrante (18) est rigide ou semi-rigide.

8. Ensemble de filtration selon l'une quelconque des revendications 1 à 7, **caractérisé en ce que** l'enveloppe filtrante (18) est réalisée à partir d'un média filtrant, notamment en tissu de type chaussette ou poche filtrante.

9. Ensemble de filtration selon l'une quelconque des revendications 1 à 7, **caractérisé en ce que** l'enveloppe filtrante (18) est réalisée à partir d'une grille métallique à maille fine ou d'un plastique de faible porosité.

10. Ensemble de filtration selon l'une quelconque des revendications 1 à 9, **caractérisé en ce que** l'enveloppe filtrante (18) est disposée autour d'un panier de filtration (12) assurant une rigidification de l'élément de filtration (15).

11. Système de filtration (10) pour piscine **caractérisé en ce qu'**il comporte un ensemble de filtration (16) tel que défini selon l'une quelconque des revendications précédentes.

## Patentansprüche

1. Filteranordnung (16) für ein Schwimmbecken, Spa oder Naturbecken, **dadurch gekennzeichnet, dass** sie umfasst:
- ein Filterkorb (12),
- ein Filterelement (15), das in dem Filterkorb (12) angeordnet ist und Öffnungen mit einer geeigneten Größe zum Begrenzen einer Verformung des Filterelements (15) aufweist,
- das Filterelement (15) eine Feinfilterung des Wassers aus dem Schwimmbecken, Spa oder Naturbecken durchführen kann, wobei das Filterelement (15) ein offenes unteres axiales Ende (15.1) und ein offenes oberes axiales Ende (15.2) aufweist, und
- eine äußere Filterhülle (18) um das Filterelement (15) herum, wobei die Filterhülle (18) einen porösen oder nicht porösen geschlossenen Boden (22) und ein ausreichend feines Filtergewebe zum zumindest zum Teil und idealerweise vollständig Zurückhalten der vom Filterelement (15) bei dessen Extraktion freigesetzten Verunreinigungen aufweist.

2. Filteranordnung nach Anspruch 1, **dadurch gekennzeichnet, dass** das Filterelement (15) und die Filterhülle (18) jeweils eine Filterfeinheit zwischen 1 und 500 Mikrometer aufweisen.

3. Filteranordnung nach Anspruch 1 oder 2, **dadurch gekennzeichnet, dass** das Filterelement (15) eine Filterpatrone mit einer hohlzylindrischen Form ist.

4. Filteranordnung nach Anspruch 3, **dadurch gekennzeichnet, dass** die Filterpatrone (15) aus einer Gewebe (19) aus einem Ziehharmonika-gefalteten Vliesmaterial besteht.

5. Filteranordnung nach Anspruch 4, **dadurch gekennzeichnet, dass** die Gewebe (19) zwischen zwei offenen Ringflanschen (20.1, 20.2) gehalten ist.

6. Filteranordnung nach Anspruch 1 oder 2, **dadurch gekennzeichnet, dass** das Filterelement (15) ein Filtermedium, ein Vorfilter, ein Filterbeutel oder ein beliebiges anderes Filterelement sein kann.

7. Filteranordnung nach einem der Ansprüche 1 bis 6, **dadurch gekennzeichnet, dass** die Filterhülle (18) starr oder halbstarr ist.

8. Filteranordnung nach einem der Ansprüche 1 bis 7, **dadurch gekennzeichnet, dass** die Filterhülle (18) aus einem Filtermedium, insbesondere aus einem Filtersocken- oder -beutelgewebe besteht.

9. Filteranordnung nach einem der Ansprüche 1 bis 7, **dadurch gekennzeichnet, dass** die Filterhülle (18) aus einem feinmaschigen Metallgitter oder aus einem Kunststoff mit geringer Porosität besteht.

10. Filteranordnung nach einem der Ansprüche 1 bis 9, **dadurch gekennzeichnet, dass** die Filterhülle (18) um einen Filterkorb (12) herum angeordnet ist, der eine Versteifung des Filterelements (15) durchführt.

11. Filtersystem (10) für ein Schwimmbecken, **dadurch gekennzeichnet, dass** es eine Filteranordnung (16) nach einem der vorhergehenden Ansprüche umfasst.

## Claims

1. A filtration assembly (16) for a swimming pool, spa or natural basin, **characterized in that** it comprises:
- a filter basket (12),
- a filter element (15) housed in the filter basket (12) and having openings with a suitable size for limiting a deformation of said filter element (15),
- said filter element (15) being able to provide a fine filtration of the water from the swimming pool, spa or natural basin, said filter element (15) having an open lower axial end (15.1) and an open upper axial end (15.2), and
- an outer filtering envelope (18) arranged around the filter element (15), said filtering envelope (18) having a porous or nonporous closed bottom (22), and having a sufficiently fine filter mesh for retaining at least a part and ideally all of the impurities released by the filter element (15) during the extraction thereof.

2. The filtration assembly according to claim 1, **characterized in that** the filter element (15) and the filtering envelope (18) each have a filter mesh between 1 and 500 micrometers.

3. The filtration assembly according to claim 1 or 2, **characterized in that** the filter element (15) is a filtering cartridge with a hollow cylindrical shape.

4. The filtration assembly according to claim 3, **characterized in that** the filtering cartridge (15) consists of a web (19) made of an accordion-pleated non-woven material.

5. The filtration assembly according to claim 4, **characterized in that** the web (19) is held between two open annular flanges (20.1, 20.2).

6. The filtration assembly according to claim 1 or 2, **characterized in that** the filter element (15) can be a filter medium, a pre-filter, a filter bag or any other filter element.

7. The filtration assembly according to any one of the claims 1 to 6, **characterized in that** the filtering envelope (18) is rigid or semi-rigid.

8. The filtration assembly according to any one of the claims 1 to 7, **characterized in that** the filtering envelope (18) is made from a filter medium, in particular from a fabric of a filtering sock or bag type.

9. The filtration assembly according to any one of the claims 1 to 7, **characterized in that** the filtering envelope (18) is made from a fine mesh metal grid or from a low porosity plastic.

10. The filtration assembly according to any one of the claims 1 to 9, **characterized in that** the filtering envelope (18) is arranged around a filter basket (12) providing stiffening of the filter element (15).

11. A filtration system (10) for a swimming pool **characterized in that** it comprises a filtration assembly (16) as defined in any one of the preceding claims.
